# FASCICULE DE BREVET EUROPEEN

(11) **EP 0 419 309 B1**
(45) Date de publication et mention de la délivrance du brevet: **26.06.1996**
(21) Numéro de dépôt: 90402400.7
(22) Date de dépôt: 30.08.1990
(51) Int. Cl.: E21B 49/08, G01N 1/10

(54) **Dispositif d'échantillonage dans un puits**
Vorrichtung zur Entnahme einer Fluidprobe aus einem Bohrloch
Apparatus for sampling a well fluid

(30) Priorité: 31.08.1989 FR 8911452
(43) Date de publication de la demande: 27.03.1991
(73) Titulaire: GAZ DE FRANCE, F-75017 Paris (FR)
(72) Inventeur: Czernichow, Jean Arnold, F-92290 Chatenay Malabry (FR)
(74) Mandataire: Berger, Helmut

(56) Documents cités:
- EP-A- 0 148 696
- EP-A- 0 331 580
- DE-A- 2 053 822
- FR-A- 1 492 170
- FR-A- 2 123 178
- GB-A- 1 601 997
- US-A- 2 927 641
- US-A- 3 957 117
- US-A- 4 246 782

## Description

L'invention a pour objet un dispositif échantillonneur pour prélever un échantillon représentatif du fluide, notamment gazeux, à une profondeur donnée, du type décrit dans le préambule de la revendication 1.

Un dispositif échantillonneur de ce type est connu par le brevet US-A-2 927 641. Ce dispositif comprend une chambre de prise d'échantillons qui communique à travers une vanne à bille avec une chambre comportant une pluralité de petites ouvertures vers l'extérieur. La vanne à bille se trouve à la sortie d'un canal interne entre les deux chambres qui est fermé par un opercule qui sera percé lorsque un échantillon doit être pris. La bille et son ressort de rappel se trouvent dans un boîtier situé en aval du canal qui communique à travers des lumières avec la chambre de prise d'échantillons. L'ouverture de la vanne à billes est déterminée par la différence des pressions régnant dans la chambre et le canal interne et varie donc. La chambre de prise d'échantillons est remplie d'air.

Ce dispositif échantillonneur connu présente l'inconvénient qu'il n'assure pas la conservation de la stoechiométrie des échantillons qui ont été pris. En effet, lors de la prise d'un échantillon, il y a lieu un phénomène d'échange entre l'air sortant de la chambre et le fluide rentrant, ce qui a pour conséquence d'empêcher certains composants du fluide rentrant de pénétrer dans la chambre. De plus, l'air restant dans la chambre fausse la stoechiométrie. D'autre part, le fluide rentrant subit entre son entrée dans le dispositif et la chambre de prise d'échantillons plusieurs détentes successives qui empêchent aussi la conservation de la stoechiométrie.

La présente invention a pour but de proposer un dispositif échantillonneur qui pallie l'inconvénient du dispositif connu et permet de conserver la stoechiométrie des échantillons.

Pour atteindre ce but, le dispositif échantillonneur comporte les caractéristiques qui sont énoncées dans la partie caractérisante de la revendication 1.

D'autres caractéristiques de l'invention font les objets des revendications dépendantes 2 à 14.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention, et dans lesquels :
La figure 1 est une vue en coupe axiale d'un dispositif échantillonneur selon la présente invention ;
La figure 2 est une vue en coupe axiale de la partie A formant la bouteille de l'échantillonneur selon la figure 1;
La figure 3 est une vue en coupe axiale selon la ligne III-III de la figure 2;
La figure 4 est une vue en coupe selon la ligne IV-IV de la figure 2;
La figure 5 est une vue à plus grande échelle et avec arrachement, du détail encerclé en V à la figure 3 ;
Les figures 6A, B, C sont des vues en coupe axiale de la partie de commande B de l'échantillonneur selon la figure 1 sous forme de trois tronçons axialement alignés de la manière indiquée par les lettres a-a et b-b ;
La figure 7 est une vue en coupe selon la ligne VII-VII de la figure 6A ;
La figure 8 est une vue en coupe selon la ligne VIII-VIII de la figure 6B ;
La figure 9 est une vue en coupe selon la ligne IX-IX de la figure 6B ; et
La figure 10 est un schéma bloc du montage électrique de l'échantillonneur selon l'invention.

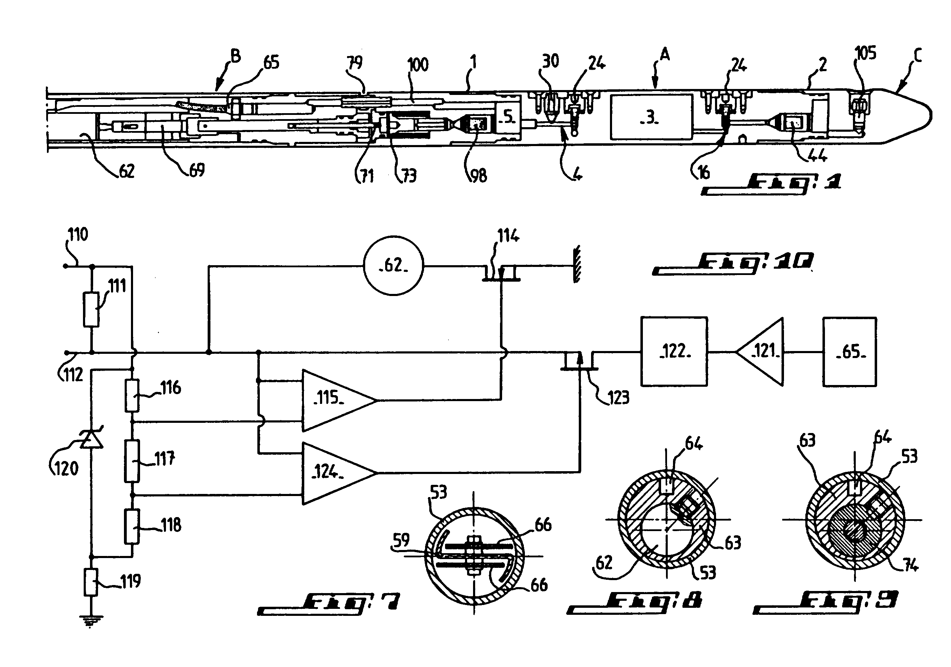

En se reportant à la figure 1, on constate qu'un dispositif échantillonneur selon l'invention se compose essentiellement de trois parties axialement alignées et amoviblement assemblées, à savoir une partie A formant une bouteille de prise d'échantillon, une partie B qui est réalisée sous forme d'un corps cylindrique séparé appelé sonde, qui est amoviblement monté sur l'extrémité arrière de la bouteille A et comprend les moyens et dispositifs de commande d'exécution et de contrôle des prises d'échantillons, commandés à distance depuis la surface, et une partie C formant nez, qui est amoviblement montée sur l'extrémité avant de la bouteille A et se termine par une partie conique.

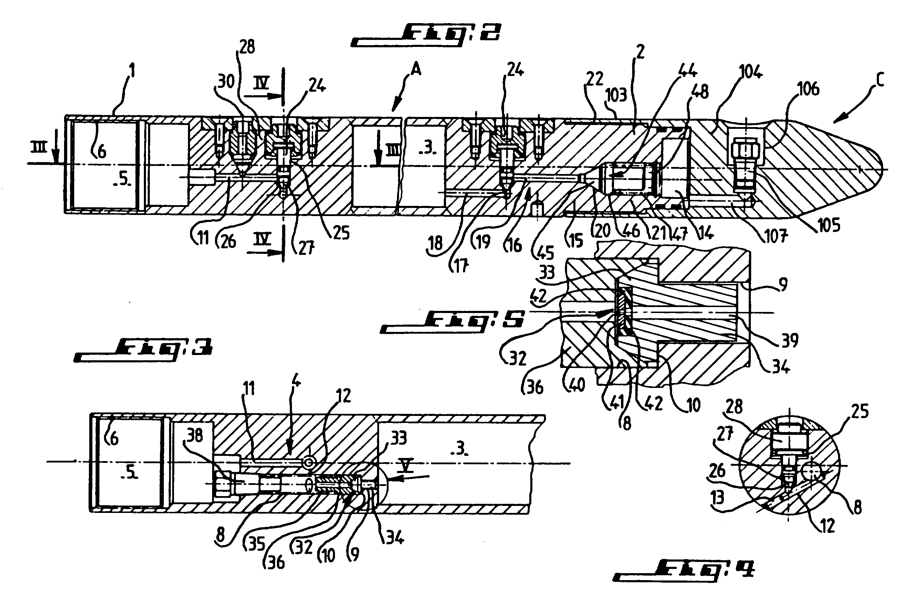

La partie formant bouteille A est représentée aux figures 2 à 5. La bouteille A comprend essentiellement une chambre de prise d'échantillons 3 qui communique à travers un canal 4 (figure 3) avec un évidement cylindrique 5 pratiqué dans l'extrémité supérieure 1 de la bouteille et dont la partie extrême axialement ouverte est pourvue d'un taraudage 6. Le canal 4 se compose d'un premier tronçon de canal axial 8 qui relie la chambre 3 et l'évidement 5 et présente dans sa partie adjacente à la chambre 3 une portion d'un diamètre plus faible 9 formant avec la partie restante 8 du canal un épaulement annulaire radial 10, d'un canal axial 11 qui s'étend à partir de l'évidement 5 jusqu'à une certaine distance de la chambre 3, ainsi que d'un tronçon de canal perpendiculaire 12 qui établit la communication entre les tronçons de canal 8 et 11. Ces derniers sont excentriques, comme le montre la figure 4, et le canal perpendiculaire 12 est obtenu par forage à partir de la surface externe de la bouteille jusqu'à une profondeur appropriée, dans une direction oblique pour établir ladite liaison. Le canal est ensuite fermé à l'extrémité ouverte par un bouchon indiqué en 13. De l'autre côté de la chambre 3, c'est-à-dire du côté du nez C la bouteille présente au niveau de son extrémité 2 un évidement cylindrique 14 axialement ouverte vers l'extérieur, et la partie pleine 15 située entre cet évidement 14 et la chambre 3 est percée par un canal de communication 16 se composant, comme le canal 4, de deux tronçons de canal axiaux 18, 19 s'étendant vers l'intérieur de la zone 15 respectivement à partir de la chambre 3 et de l'évidement 14 et d'une portion de canal transversale 17 qui relie les tronçons de canal 18 et 19. En direction de l'évidement 14, le canal 19 comporte une zone d'élargissement conique 20 suivie d'une zone cylindrique de plus grand diamètre 21. On constate encore que la bouteille présente au niveau de son extrémité 2 un filetage extérieur 22 permettant l'assemblage par vissage du nez C.

La bouteille A comporte un certain nombre d'organes qui assurent son fonctionnement. Ainsi on constate la présence, de part et d'autre de la chambre 3 d'une vanne d'isolement 24 qui est montée dans un perçage radial étagé 25 pratiqué dans la partie pleine de la bouteille au niveau du canal transversal respectif 12, 17 et mettant en communication les canaux 11, 12 et 17, 19. Dans la partie entre ces deux canaux, le perçage est conformé en siège d'étanchéité 26 coopérant avec un élément en forme de pointeau 27 par lequel se termine la vanne d'isolement 24. Cette vanne est axialement déplaçable dans le perçage 25 par une partie filetée 28 sous l'effet d'un outil approprié. Il est à noter que les pointeaux 27, et leurs sièges 26 appropriés constituent un contact métal-métal, ce qui assure une parfaite étanchéité.

La bouteille A comporte en outre, entre la vanne d'isolement 24 et l'évidement 5, c'est-à-dire dans la partie supérieure de la bouteille, une vanne de purge 30 également montée axialement mobile dans un perçage radial depuis la surface cylindrique extérieure jusqu'au tronçon de canal 11. Cette vanne de purge peut être réalisée de toute manière connue en soi et permet d'établir une communication entre le canal 11 et l'extérieur.

La bouteille A comprend, insérée dans le canal 8 une buse de petit diamètre, juste à l'entrée dans la chambre 3. Cette buse (figure 5) est réalisée sous forme d'un gicleur indiqué en 32 qui comprend une partie tronconique 33 et une partie cylindrique formant tige 34 par laquelle le gicleur s'engage dans la partie de canal 9 de plus faible diamètre en étant repoussé par la base de la partie tronconique 33 contre l'épaulement 10 du canal 8, sous l'effet d'un ressort 35, par l'intermédiaire d'un élément 36 d'appui disposé dans le canal 8 et dont la face frontale coopérant avec la partie tronconique 33 du gicleur 32 présente une forme complémentaire. Le ressort 35 prend appui par une extrémité sur un face frontale appropriée de l'élément 36 et par son autre extrémité sur un organe 38 qui est vissé dans le canal 8 à partir de l'évidement 5. Comme on le voit sur la vue de détail à plus grande échelle de la figure 5, ce gicleur est traversé par un canal axial 39. Mais au niveau de l'ouverture de ce canal 39 vers le canal 8, on a prévu un rétrécissement réalisé sous forme d'un trou calibré 40 pratiqué dans une pierre 41 placée dans un élément de support 42 axialement percé et monté coaxialement dans l'extrémité du gicleur.

La bouteille A comporte, dans sa partie inférieure, au niveau de son extrémité 2, une vanne anti-retour 44, qui est montée dans les parties tronconique 20 et cylindrique à plus grand diamètre 21 du canal interne 19 de la bouteille. Comme le montre la figure 2, cette vanne anti-retour 44 présente une tête tronconique 45 coopérant avec la partie tronconique 20 du canal 19, suivie d'une partie cylindrique 46 disposée de façon coulissante dans la partie de canal 21. Les deux surfaces tronconiques 20 et 45, qui sont de forme complémentaire, sont poussées l'une sur l'autre par un ressort 47 disposé dans la partie de canal 21 et prenant appui sur une bague 48 d'appui disposée au niveau de l'extrémité ouverte de la partie de canal 21.

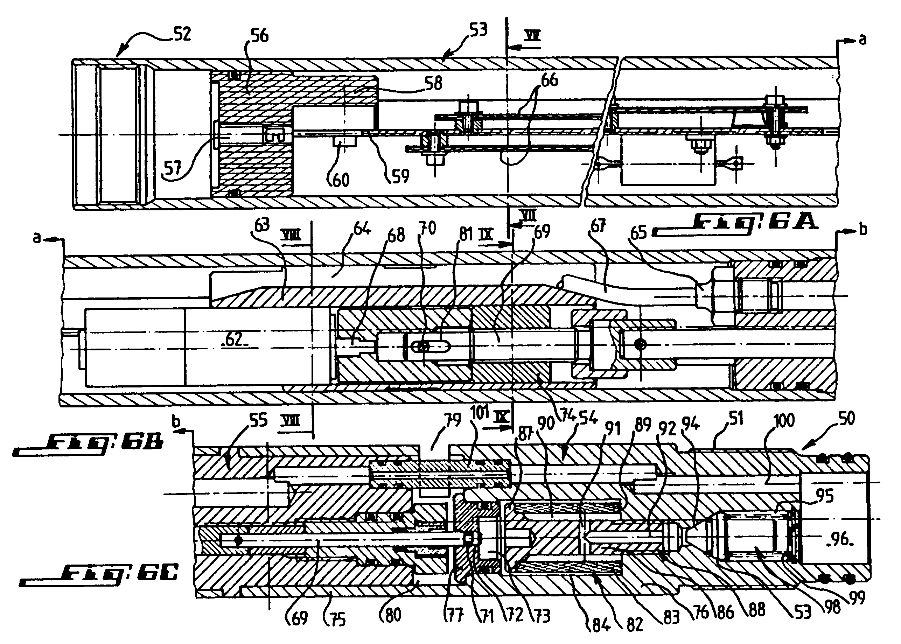

En se reportant aux figures 6A à 6C, on décrira ci-après la partie B formant sonde de l'échantillonneur selon l'invention. Chacune des figures montre la structure d'un tronçon de la sonde qui, pour constituer celle-ci, sont axialement alignés selon a-a des figures 6A et 6B et b-b des figures 6B et 6C. L'extrémité à gauche sur la figure 6A forme l'extrémité supérieure de la sonde tandis que l'extrémité à droite de la figure 6C constitue l'extrémité inférieure de la sonde par laquelle celle-ci est assemblée à l'extrémité supérieure 1 de la bouteille A. Cette extrémité inférieure de la sonde est indiquée en 50 et est pourvue d'une zone cylindrique extérieure filetée 51 permettant le vissage de la bouteille A sur la sonde. L'extrémité supérieure 52 de la sonde B est adaptée pour permettre la fixation du dispositif de suspension (non représenté) de l'échantillonneur au câble de descente et de remontée dans le puits de celui-ci. L'échantillonneur se compose essentiellement de trois parties séparées axialement alignées, à savoir un corps tubulaire ou gaine métallique 53, un corps cylindrique inférieur 54 et une partie intermédiaire 55 sur laquelle la gaine 53 et le corps 54 sont emmanchés.

Le corps tubulaire ou gaine 53 présente en haut, c'est-à-dire au niveau de l'extrémité 52 de la sonde, un bouchon 56 en un matériau électriquement isolant, au centre duquel est placé un connecteur électrique femelle 57 permettant la connexion électrique à un conducteur électrique formant l'âme du câble de suspension et dont l'extrémité inférieure est reliée à un câble interne (non représenté) assurant l'alimentation en énergie électrique des différents dispositifs électriques disposés à l'intérieur de la sonde. Le bouchon 56 présente un prolongement axial 58 à section transversale en forme d'un arc de cercle, qui permet le montage sur le bouchon d'un châssis métallique 59, à l'aide de vis indiqué en 60. Comme il ressort de la figure 7, ce châssis est réalisé sous forme d'une plaque disposée diamétralement dans la gaine 53 et s'étendant axialement et est fixé à son autre extrémité au boîtier d'un moto-réducteur électrique 62 monté fixe dans un corps de support métallique 63, excentré, comme cela ressort de la figure 8. Le corps de support 63 est monté fixe dans la gaine 53 dont il occupe la section transversale, tout en présentant dans sa périphérie une gorge axiale 64. Ce corps 63, en plus de sa fonction du support du carter du moteur 62 établit également la liaison électrique du pôle de terre du moteur à la gaine 53 formant la masse de l'échantillonneur. Le châssis 59, pourvu d'ailettes de rigidification porte des cartes électriques 66, comportant sous forme de circuits imprimés les circuits de commande du moteur électrique 62 et les circuits électriques associés à un capteur de pression 65 adapté pour contrôler la pression du fluide à l'intérieur de la bouteille A, comme il sera expliqué plus loin. Ce capteur de pression 65 est relié par un câble 67 passant à travers la gorge axiale 64 à la carte électrique qui lui est associée.

L'arbre rotatif 68 de sortie du moteur 62 est rendu solidaire en rotation d'une tige filetée 69, par l'intermédiaire d'une goupille 70 s'engageant dans des ouvertures axiales oblongues 81 de la tige 69 de façon à permettre un mouvement axial de celle-ci. La tige est vissée dans un écrou 74 monté fixe dans le corps de support 63 (figure 9). La tige 69 qui se compose de plusieurs parties axialement alignées, traverse axialement la partie intermédiaire 55 de la sonde et porte à son extrémité libre un joint 71 du type joint O'RING. Ce dernier vient obstruer l'orifice d'entrée 72 d'une chambre interne cylindrique 73 de la sonde, qui est pratiquée dans son corps 54 constituant l'extrémité inférieure de celle-ci.

Le corps 54 comporte une portion supérieure tubulaire 75 par laquelle il est axialement emmanché sur la partie intermédiaire 55 et une partie inférieure pleine 76 dans laquelle est pratiquée la chambre cylindrique 73, à partir de la surface frontale côté partie tubulaire 75. L'orifice 72 susceptible d'être obstrué par le joint 71 est formé par un canal axial percé dans un organe écrou 77 vissé dans la chambre 73. Il est important de constater que la paroi de la partie tubulaire 75 présente une découpe 79 qui traverse cette paroi et s'étend sur un arc de cercle de par exemple 90°. Cette découpe 79 constitue une lumière qui établit une communication entre l'extérieur de la sonde et un espace interne 80 que l'orifice 72 met en communication avec la chambre 73 s'il n'est pas obstrué par le joint 71. Ce dernier et l'écrou 77, avec son orifice 72, constituent la vanne de prise des échantillons de l'échantillonneur proposé par l'invention.

Dans la chambre 73 est monté un dispositif formant filtre 82 formé par un élément de filtre tubulaire 83 qui s'étend coaxialement dans la chambre 73 tout en laissant subsister un espace annulaire 84 entre sa surface cylindrique externe et la face cylindrique interne de la chambre. Ce filtre tubulaire 83 est porté par une pièce 86 qui ferme le filtre du côté de l'orifice 72 et est vissé dans un prolongement cylindrique de plus faible diamètre taraudé 88, de la chambre. Le prolongement forme avec la chambre 73 une surface radiale perpendiculaire 89 qui ferme le filtre tubulaire 83 à son autre extrémité. La pièce de support 86 du filtre tubulaire 83 délimite avec ce dernier un espace interne tubulaire 90 qui communique à travers un canal diamétral 91 dans la pièce de support 86 avec un canal axial 92 de cette pièce, qui débouche dans la chambre de prolongement 88. Cette dernière se termine par une partie de transition de plus faible diamètre pour s'élargir ensuite en 94, de façon conique, avant de former à nouveau une portion de chambre cylindrique 95 qui débouche dans un évidement cylindrique 96 pratiqué dans l'extrémité inférieure 50 de la sonde. Comme le montre clairement la figure 6C, la partie tronconique 94 constitue le siège d'une vanne anti-retour 98 à tête tronconique, du même type que la vanne anti-retour 44 dans la ,partie inférieure de la bouteille A. Le corps mobile est poussé par un ressort 99 sur le siège tronconique 94.

En se reportant aux figures 6B et 6C, on constate que le moteur 62, la tige 69 de commande de la vanne de prise d'échantillons et la chambre 73, avec ses prolongations axiales, s'étendent axialement mais excentriquement dans la sonde. Cette disposition permet de pratiquer dans le corps inférieur 54 et la partie intermédiaire 55 de la sonde un canal continu sensiblement axial 100 qui s'étend depuis l'évidement 96 à l'extrémité de la sonde jusqu'au capteur de pression 65. On constate que le canal 100 traverse l'espace interne 80 ouvert vers l'extérieur à travers la lumière 79, en passant dans une pièce tubulaire 101 monté à ses deux extrémités respectivement dans le corps intermédiaire 55 et le corps inférieur 54.

En se référant à nouveau à la figure 2, on décrira ci-après la partie avant C de l'échantillonneur, qui constitue le nez de celui-ci.

Cette partie C comprend une partie arrière cylindrique tubulaire 103 pourvue d'un filetage intérieur qui permet l'assemblage par vissage de la partie C sur l'extrémité avant de la bouteille A, et une zone intermédiaire 104 qui comprend une vanne de prélèvement 105 montée dans un canal radial étagé 106 qui s'étend à partir de la surface cylindrique extérieure et débouche à l'intérieur de la zone 104 dans un canal axial borgne 107 s'ouvrant dans l'espace délimité par la partie tubulaire 103 et en communication avec l'évidement 14 de l'extrémité inférieure 2 de la bouteille A. Cette vanne 105 peut être de tout type connu en soi. La portion avant de la partie C formant nez de l'échantillonneur présente la forme conique déjà mentionnée.

Bien que la figure 1 montre un échantillonneur composé de la sonde B, d'une bouteille A et de la partie C formant nez, il est configuré de façon à permettre le montage en série de plusieurs bouteilles, la deuxième bouteille étant vissée par son extrémité tubulaire supérieure 1 sur l'extrémité filetée inférieure 22 de la première bouteille.

Le dispositif échantillonneur selon l'invention est commandé et contrôlé depuis la surface. Ses dispositifs électriques sont alimentés en énergie électrique, reçoivent les commandes et dialoguent avec l'installation à la surface par un conducteur électrique prévu dans le câble de suspension de l'échantillonneur. L'alimentation en énergie et le mode de dialogue entre l'échantillonneur et la surface sera décrite en se reportant a la figure 10 représentant sous forme d'un schéma bloc simplifié le système électrique de l'échantillonneur. Les circuits électriques de ce système se trouvent sous forme de circuits intégrés sur les cartes 66, 67 (figure 6A).

Le système électrique doit assurer l'alimentation en courant électrique du moteur 62 et du capteur de pression 65 et l'envoi des informations en provenance du capteur, concernant la pression qui règne dans la chambre 3 de la bouteille A, à la surface. Le moteur et le capteur peuvent être commandés sélectivement depuis la surface. A cette fin l'invention prévoit un mode d'adressage sélectif par l'intensité du courant continu transmis à l'échantillonneur. Pour pouvoir reconnaître les commandes, le système électrique comprend un circuit décodeur des commandes qui mesure le courant d'alimentation de la sonde arrivant à travers la ligne du câble à la borne d'entrée indiquée en 110. Une résistance 111 relie cette borne 110 au câble intérieur 112 de la sonde. Dans le schéma synoptique de la figure 10 le moteur 62 est monté entre ce câble 112 et la masse, par l'intermédiaire d'un élément commutateur avantageusement formé par un commutateur électronique du type DMOS, commandé par un premier comparateur 115 dont une entrée est reliée au câble interne 112 tandis que l'autre entrée est reliée à la borne commune de deux résistances 116, 117 d'un diviseur de tension, qui comporte encore une troisième résistance 118 et est montée entre la borne d'entrée 110 et une résistance 119 qui est mise à la masse. Sur le montage en série des trois résistances 116 à 118 est montée une diode Zener 120. Le capteur de pression 65 est relié par un amplificateur 121 et un convertisseur tension-fréquence 122 au câble 112, par l'intermédiaire d'un autre élément commutateur 123 avantageusement également du type DMOS. Ce dernier est commandé par un deuxième comparateur 124 relié par une entrée au câble interne 112 et par son autre entrée à la borne commune des résistances 117 et 118.

Les deux comparateurs 115, 124 formant le circuit décodeur susmentionné sont agencés de façon à être excités lorsque le courant envoyé à travers le câble à la borne d'entrée 110 dépasse des valeurs de seuil prédéterminées respectifs.

On décrira ci-après le fonctionnement du dispositif échantillonneur selon la présente invention.

Avant de descendre l'échantillonneur dans le puits, on établit un vide dans la chambre 3 de la bouteille A. La vanne de prise d'échantillon est fermée, c'est-à-dire le joint 71 au bout de la tige 69 axialement mobile et commandé par le moteur 62 est engagé dans l'orifice 72 et isole ainsi la chambre 73 de l'extérieur. Pendant la descente de ce dernier dans le puits, on peut constamment contrôler le vide par mesure de la pression à l'intérieur de la chambre, par l'intermédiaire du capteur de pression 65. Il suffit à cette fin d'envoyer à travers le câble un courant continu supérieur à une première valeur de seuil de par exemple 190 mA, ce qui excite le comparateur 124 qui produit alors un signal d'ouverture du commutateur 123. Ceci permet l'envoi des signaux représentatifs de la pression mesurée par le capteur 65 au câble qui les transmet à la surface. Il est a noter que les valeurs de tensions produites à la sortie du capteur 65 et amplifiées par l'amplificateur 121 sont converties en valeurs de fréquence appropriées par le convertisseur tension-fréquence 122. Ces mesures permettent ainsi le contrôle mesure à la surface de la pression interne à la bouteille.

Le déclenchement de la prise d'un échantillon lorsque l'échantillonneur a atteint la profondeur désirée, se fait par l'envoi d'un courant supérieur à une deuxième valeur de seuil de par exemple 240 mA. Le comparateur 115 produit en réponse à ce signal un signal au commutateur 114 qui ferme le circuit d'alimentation du moteur 62. La rotation de l'arbre de sortie 68 du moteur impose à la tige qui porte le joint 71 un mouvement axial de retrait de ce joint de l'orifice 72, ce qui établit la communication entre la chambre 73 à l'intérieur de la sonde et l'extérieur, à travers la lumière 79. Ainsi le fluide, plus précisément le gaz contenu dans le puits peut pénétrer dans la chambre 73 et s'écouler dans la chambre 3 de la bouteille A, en passant par le filtre 82, la vanne anti-retour 98 et la buse de détente réalisée sous forme du gicleur 33, la vanne d'isolement 24 étant ouverte. Le gicleur a pour fonction de limiter le débit de gaz en amont et évite ainsi la condensation des effractions lourdes avant la chambre 3 de l'échantillonneur. Le gicleur se trouve à cette fin juste à l'entrée de la bouteille. La détente se produit donc à l'intérieur de celle-ci et bien que cette détente produise éventuellement des changements de phase, la stoechiométrie des différents constituants du gaz est strictement conservée. En effet, le volume de l'espace interne en amont de la chambre 3 est négligeable par rapport au volume de celle-ci. Le filtre 82 retient les poussières éventuellement présentes dans le gaz s'écoulant dans la chambre 3, poussières qui pourraient gêner la fermeture de la vanne anti-retour 98 ou détériorer les différentes vannes. Ainsi se déroule donc la phase de la prise de l'échantillon. Il est à noter que la mesure de la pression à l'intérieur de la chambre 3, par le capteur de pression 65 continue d'être effectuée pendant cette période. Le gaz contenu dans la chambre 3 reste emprisonné étant donné que les vannes anti-retour 98 et 44, situées de part et d'autre de la chambre 3 empêchent les gaz de ressortir de la chambre. Il est à noter que la vanne de prélèvement 105 dans le nez C de l'échantillonneur est bien entendu aussi fermée.

Dans ces conditions l'échantillon peut être remonté à la surface où on pourrait fermer les vannes d'isolement 24 de la bouteille A, situées de part et d'autre de la chambre 3 et démonter la bouteille de l'échantillonneur. L'échantillon pourrait ainsi être stocké à l'intérieur de la bouteille pour une analyse ultérieure de son contenu. Pour effectuer un prélèvement de l'échantillon, on effectuera celui-ci en ouvrant la vanne de prélèvement 105 qui équipe le nez C de l'échantillonneur, celle-ci étant bien entendu à cette fin montée sur l'extrémité inférieure de la bouteille.

Concernant la vanne de purge 30, elle permet de dévisser la bouteille A de la sonde B alors que la bouteille est en pression, soit pour la vider complètement, après fermeture de la vanne d'isolement, soit pour purger le volume entre la vanne anti-retour 98 et la bouteille. En ce qui concerne la vanne d'isolement 24 située dans la partie inférieure de la bouteille A, elle permet de faire le vide avant la prise de l'échantillon et de transférer l'échantillon après sa prise.

Comme cela a déjà été expliqué plus haut, la configuration de l'échantillonneur en plusieurs parties indépendantes permet de monter en série dans le même échantillonneur plusieurs bouteilles A. La bouteille inférieure porterait alors la partie C formant nez.

## Revendications

1. Dispositif échantillonneur pour prélever un échantillon représentatif du fluide notamment gazeux (28), à une profondeur donnée, comprenant une partie (B) de commande de l'échantillonneur formant sonde, susceptible d'être amoviblement assemblée à une extrémité de la partie formant bouteille (A) et comprenant un espace interne (80) qui communique, d'une part, avec l'extérieur par des moyens de passage (79) pratiqués dans la paroi latérale de cette partie (B) et permettant l'entrée dans cet espace (80) du fluide à échantillonner et, d'autre part, par un canal interne (73, 88, 95, 4) avec la chambre réceptrice (3) de l'échantillon dans la bouteille (A), un dispositif d'obturation (71) étant monté dans la sonde (B) et adapté pour être commandé vers une position d'ouverture de ce canal, tandis qu'un organe (32) détermine l'écoulement de fluide dans la chambre après ouverture du dispositif d'obturation, le fluide étant maintenu dans ladite chambre, caractérisé en ce que le dispositif d'obturation (71) est formé par l'élément mobile d'une vanne de prise d'échantillons (72) adapté pour être commandé à distance depuis la surface terrestre, ou équivalent, entre une position d'obturation dudit canal et une position d'ouverture de celui-ci dans laquelle l'élément mobile libère ce canal, que la chambre réceptrice (3) est sous vide avant l'ouverture du dispositif d'obturation (71), que les moyens de passage d'entrée (79) s'étendent sur une zone relativement importante de la paroi latérale de la partie (B), que l'organe (32) déterminant l'écoulement du fluide dans la chambre après ouverture du canal par le dispositif d'obturation (71) est formé par une buse de détente de petit diamètre en forme d'un gicleur (32) pour limiter le débit du fluide en amont de la buse, ayant un trou de passage calibré (40), le gicleur est monté dans la partie de canal dudit canal interne, qui est située à l'entrée de la chambre (3) de prise d'échantillons, le volume dudit canal interne étant négligeable par rapport au volume de la chambre (3), de façon que, grâce à la limitation du débit du fluide par le gicleur et à ce volume négligeable, la détente du fluide ne se produise qu'à l'intérieur de la chambre (3) après l'ouverture du canal interne par le dispositif d'obturation (71), pour que la stoechiométrie de l'échantillon soit conservée.

2. Dispositif échantillonneur selon la revendication 1, caractérisé en ce que les moyens d'actionnement comprennent un moteur télécommandé (62) à arbre de sortie rotatif (68) qui s'étend parallèlement à l'axe du dispositif et un ensemble de transformation du mouvement rotatif de l'arbre moteur en un mouvement axial d'une tige (69) déplaçable dans la direction de l'axe du dispositif échantillonneur et en ce que le clapet d'obturation (71) de la vanne de prise d'échantillon (72) est monté en bout de la tige (69) solidaire en déplacement axial de cette tige.

3. Dispositif échantillonneur selon la revendication 2, caractérisé en ce que la tige (69) est reliée à l'arbre rotatif de sortie (68) du moteur électrique (62) par des moyens de solidarisation en rotation mais permettant un mouvement axial relatif de la tige (69) par rapport à l'arbre rotatif (68), et en ce qu'un écrou fixe (74) est prévu, que traverse axialement ladite tige en y étant engagé par un filetage extérieur.

4. Dispositif échantillonneur selon l'une des revendications 1 à 3, caractérisé en ce qu'il comprend des moyens de retenue de l'échantillon dans la chambre (3) de la bouteille, qui sont formés par une vanne anti-retour (98) montée dans le canal (95) précité en aval de la vanne de prise d'échantillons (71, 72).

5. Dispositif échantillonneur selon l'une des revendications 1 à 4, caractérisé en ce qu'un filtre (82) est monté dans le canal (73) d'écoulement du fluide dans la sonde, ce filtre étant adapté pour retenir d'éventuelles poussières contenues dans ledit fluide.

6. Dispositif échantillonneur selon l'une des revendications 1 à 5, caractérisé en ce que la sonde (B) comporte un capteur de pression (65) disposé de façon à être exposé au fluide en aval de la vanne anti-retour (98), auquel est associé un dispositif de transmission à la surface, des données relatives à la pression mesurée.

7. Dispositif échantillonneur selon l'une des revendications 1 à 6, caractérisé en ce que la bouteille (A) comporte des moyens d'isolement (24) de la chambre (3), qui sont montés dans le canal interne (4) de celle-ci et sont formés avantageusement par une vanne d'isolement comportant un clapet de fermeture du canal.

8. Dispositif échantillonneur selon l'une des revendications 1 à 7, caractérisé en ce que la bouteille (A) comprend dans sa partie inférieure (2) opposée à l'extrémité reliée à la sonde (B), un évidement (14) relié à la chambre (3) par un canal interne (16) et en ce qu'un organe d'isolement (24) tel qu'une vanne de fermeture de canal est associé à ce canal.

9. Dispositif échantillonneur selon la revendication 8, caractérisé en ce qu'une vanne anti-retour (44) est montée dans le canal (16) entre l'organe d'isolement (24) et l'évidement (14) précité.

10. Dispositif échantillonneur selon l'une des revendications 1 à 9, caractérisé en ce qu'un corps formant nez (C) de l'échantillonneur est amoviblement assemblable, en alignement axial, sur l'extrémité inférieure (2) de la bouteille (A), ce nez comportant un canal interne (106, 107) qui communique avec le canal interne inférieur (16) de la bouteille et débouche dans la face externe du nez par un orifice de connexion pour un transfert des échantillons emprisonnés dans la bouteille, et en ce qu'une vanne de prélèvement (105) est disposée dans ledit canal interne (106).

11. Dispositif échantillonneur selon la revendication 9 ou 10, caractérisé en ce que l'extrémité inférieure (2) de la bouteille (A) est amoviblement assemblable à l'extrémité supérieure (1) d'une autre bouteille (A), les deux chambres (3) des deux bouteilles (A) communiquant par leur canaux internes respectivement inférieur (16) et supérieur (4).

12. Dispositif échantillonneur selon l'une des revendications 1 à 11, caractérisé en ce que les dispositifs d'actionnement et de contrôle disposés dans la sonde, tels que le moteur (62) d'actionnement de la vanne de prise d'échantillons (71, 72) et le capteur de pression (65) sont alimentés en énergie électrique et commandés électriquement à travers le câble auquel l'échantillonneur est suspendu, et en ce que le montage électrique pour la réception et l'émission des signaux électriques est disposé dans ladite sonde.

13. Dispositif échantillonneur selon la revendication 12, caractérisé en ce que chaque dispositif tel que le moteur (62) et le capteur de pression (65), est sélectivement adressable par un signal de commande codé, avantageusement formé par un courant continu de valeur spécifique, transmis au montage électrique à travers le câble de suspension précité, et en ce que le montage électrique comporte des décodeurs (115, 124) de ses signaux.

14. Dispositif échantillonneur selon la revendication 12 ou 13, caractérisé en ce que le montage électrique comprend un interface capteur comprenant un convertisseur tension-fréquence (122) et transmettant à la surface les valeurs de pression captées sous forme de signaux de fréquences différentes appropriées.

## Patentansprüche

1. Probeentnahmevorrichtung (28) zur Entnahme einer das insbesondere gasförmige Fluid darstellenden Probe in einer gegebenen Tiefe, die einen eine Sonde bildenden Teil (B) zur Betätigung des Entnehmers aufweist, welcher geeignet ist, an einem Ende des eine Flasche bildenden Teiles (A) abnehmbar angebracht zu werden und der einen Innenraum (80) umfasst, der einerseits mit Aussen durch in der Seitenwand dieses Teiles (B) gebildete und den Eintritt in diesen Innenraum (80) des als Probe zu entnehmenden Fluids gestattende Durchgangsmittel (79) und andererseits durch einen inneren Kanal (73, 88, 95, 4) mit der Probeaufnahmekammer (3) in der Flasche (A) in Verbindung steht, wobei eine Verschlußvorrichtung (71) in der Sonde (B) angeordnet und angepasst ist, um zu einer Öffnungsstellung hin dieses Kanals betätigt zu werden, während ein Glied (32) das Fliessen des Fluids in der Kammer nach der Öffnung der Verschlußvorrichtung bestimmt, wobei das Fluid in der besagten Kammer gehalten wird, dadurch gekennzeichnet, dass die Verschlußvorrichtung (71) durch das bewegbare Element eines Probeentnahmeventiles (72) gebildet wird, welches Element angepasst ist, um von der Erdoberfläche oder etwas Äquivalenten aus zwischen einer den besagten Kanal verschliessenden Stellung und einer denselben öffnenden Stellung in welcher das bewegbare Element diesen Kanal freisetzt, ferngesteuert zu werden, dass die Aufnahmekammer (3) unter Vakuum vor dem Öffnen der Verschlußvorrichtung (71) ist, dass die Eintrittsdurchgangsmittel (79) sich über einen verhältnismässig bedeutenden Bereich der Seitenwand des Teiles (B) erstrecken, dass das das Strömen des Fluids in der Kammer nach Öffnung des Kanals durch die Verschlußvorrichtung (71) bestimmende Glied durch eine ein kalibriertes Durchgangsloch (40) aufweisende Entspannungsdüse kleinen Durchmessers in der Gestalt einer Spritzdüse (32) gebildet wird, um die Mengendurchsatzleistung des Fluids stromaufwärts der Düse zu beschränken, wobei die Spritzdüse in demjenigen Abschnitt des Kanals des besagten inneren Kanals angeordnet ist, der am Eingang der Probeentnahmekammer (3) gelegen ist, wobei das Volumen des besagten inneren Kanals vernachlässigbar klein in bezug auf das Volumen der Kammer (3) ist, so dass, dank der Begrenzung der Mengendurchsatzleistung des Fluids durch die Spritzdüse und des vernachlässigbaren Volumens, die Entspannung des Fluids nur innerhalb der Kammer (3) nach dem Öffnen des inneren Kanals durch die Verschlußvorrichtung (71) stattfindet, damit die Stöchiometrie der Probe bewahrt bleibt.

2. Probeentnahmevorrichtung gemäss Anspruch 1, dadurch gekennzeichnet, dass die Betätigungsmittel einen ferngesteuerten Motor (62) mit drehbarer Ausgangswelle (68), die sich parallel zur Achse der Vorrichtung erstreckt und eine Gesamteinrichtung zur Umwandlung der Drehbewegung der Antriebswelle in eine Axialbewegung einer in der Richtung der Achse der Probeentnahmevorrichtung verschiebbaren Stange (69) umfassen und dass das Sperrglied (71) des Probeentnahmeventils (72) am Ende der Stange (69) axial verschiebfest mit dieser Stange angeordnet ist.

3. Probeentnahmevorrichtung gemäss Anspruch 2, dadurch gekennzeichnet, dass die Stange (69) mit der Ausgangsdrehwelle (68) des elektrischen Motors (62) durch jedoch eine relative Axialbewegung der Stange (69) in bezug auf die Drehwelle (68) gestattende Mittel zur drehfesten Verbindung verbunden ist und dass eine ortsfeste Mutter (74) vorgesehen ist, welche durch die besagte Stange, die dort durch ein Aussengewinde in Eingriff steht, axial durchsetzt wird.

4. Probeentnahmevorrichtung gemäss einem der Ansprüche 1 bis 3, dadurch gekennzeichnet, dass sie Mittel zum Zurückhalten der Probe in der Kammer (3) der Flasche aufweist, die durch ein in dem vorgenannten Kanal (95) stromabwärts des Probeentnahmeventils (71, 72) angeordneten Rückschlagventils (98) gebildet werden.

5. Probeentnahmevorrichtung gemäss einem der Ansprüche 1 bis 4, dadurch gekennzeichnet, dass ein Filter (82) in dem Kanal (73) zum Fliessen des Fluids in der Sonde angeordnet ist, wobei dieser Filter angepasst ist, um etwaige in dem besagten Fluid enthaltene Stäube zurückzuhalten.

6. Probeentnahmevorrichtung gemäss einem der Ansprüche 1 bis 5, dadurch gekennzeichnet, dass die Sonde (B) einen Druckmeßwertgeber (65) aufweist, der angeordnet ist, um den Fluid stromaufwärts des Rückschlagventils (98) ausgesetzt zu werden und welchem eine Vorrichtung zur Übertragung der den gemessenen Druck betreffenden Daten an die Oberfläche zugeordnet ist.

7. Probeentnahmevorrichtung gemäss einem der Ansprüche 1 bis 6, dadurch gekennzeichnet, dass die Flasche (A) Mittel (24)) zur Isolierung der Kammer (3) aufweist, die in dem inneren Kanal (4) derselben angeordnet sind und vorteilhaft durch ein eine Klappe zum Verschliessen des Kanals aufweisendes Absperrventil gebildet werden.

8. Probeentnahmevorrichtung gemäss einem der Ansprüche 1 bis 7, dadurch gekennzeichnet, dass die Flasche (A) in ihrem den mit der Sonde (B) verbundenen Ende entgegengesetzten unteren Teil eine durch einen inneren Kanal (16) mit der Kammer (3) verbundene Aussparung (14) aufweist und dass ein Isolierungsglied (24), wie ein Ventil zum Verschluss dieses Kanals diesem Kanal zugeordnet ist.

9. Probeentnahmevorrichtung nach Anspruch 8, dadurch gekennzeichnet, dass ein Rückschlagventil (44) in dem Kanal (16) zwischen dem Isolierungsglied (24) und der vorgenannten Aussparung (14) angeordnet ist.

10. Probeentnahmevorrichtung nach einem der Ansprüche 1 bis 9, dadurch gekennzeichnet, dass ein die Nase bildender Körper (C) des Entnehmers in axialer Ausrichtung an dem unteren Ende (2) der Flasche (A) abnehmbar anbringbar ist, wobei diese Nase einen inneren Kanal (106, 107) aufweist, der mit dem unteren inneren Kanal (16) der Flasche in Verbindung steht und in der Aussenfläche der Nase durch eine Anschlußöffnung zur Überführung der in der Flasche eingesperrten Proben ausmündet und dass ein Entnahmeventil (105) in dem besagten inneren Kanal (106) angeordnet ist.

11. Probeentnahmevorrichtung nach Anspruch 9 oder 10, dadurch gekennzeichnet, dass das untere Ende (2) der Flasche (A) an dem oberen Ende (1) einer anderen Flasche (A) abnehmbar anbringbar ist, wobei die beiden Kammern (3) der beiden Flaschen (A) durch ihren jeweiligen unteren und oberen inneren Kanal (16) und (4) in Verbindung stehen.

12. Probeentnahmevorrichtung nach einem der Ansprüche 1 bis 11, dadurch gekennzeichnet, dass die in der Sonde angeordneten Betätigungs- und Kontrollvorrichtungen, wie der Motor (62) zur Betätigung des Probeentnahmeventils (71, 72) und der Druckmeßwertgeber (65) durch das Kabel, an welchem der Entnehmer aufgehängt ist, mit elektrischer Energie gespeist und elektrisch gesteuert werden und dass die elektrische Schaltung zum Empfang und zum Aussenden der elektrischen Signale in der besagten Sonde angeordnet ist.

13. Probeentnahmevorrichtung nach Anspruch 12, dadurch gekennzeichnet, dass jede Vorrichtung, wie der Motor (62) und der Druckmeßwertgeber (65) durch ein kodiertes Steuersignal wahlweise adressierbar ist, welches vorteilhaft durch einen an die elektrische Schaltung durch das vorgenannte Aufhängungskabel hindurch vertragenen Gleichstrom spezifischen Wertes gebildet wird und dass die elektrische Schaltung Dekodierer (115, 124) für ihre Signale aufweist.

14. Probeentnahmevorrichtung nach Anspruch 12 oder 13, dadurch gekennzeichnet, dass die elektrische Schaltung eine einen Spannungs-Frequenz- Umsetzer (122) und die als Signale geeigneter unterschiedlicher Frequenzen aufgespürten Druckwerte übertragende Wertgeberschnittstelle umfasst.

## Claims

1. Sampling device for taking a sample representative of the in particular gaseous fluid (28) at a given depth, comprising a part (B) for the control of the sampler forming a probe, adapted to be removably assembled at one end of a part forming a bottle (A) and comprising an internal space (80) which communicates, on the one hand, with the outside by passageway means (79) formed in the sidewall of this part (B) and permetting the ingress into this space (80) of the fluid to be sampled and, on the other hand, by an internal duct (73, 88, 95, 4) with the sample-receiving chamber (3) in the bottle (A), a closure device (71) being mounted in the probe (B) and adapted to be operated towards an opening position of this duct, whereas a member (32) determines the fluid flow in the chamber after opening of the closing device, the fluid being kept in the said chamber, characterized in that the closing device (71) is formed of the movable element of a valve for taking samples (72) adapted to be remote-controlled from the earth surface or equivalent between a position of closing of the said duct and a position of opening of the latter, in which the movable element frees this duct, in that the receiving chamber (3) is under vacuum before the opening of the closing device (71), in that the inlet passageway means (79) extend over a relatively substantial zone of the sidewall of the part (B), in that the member (32) determining the flow of the fluid in the chamber after opening of the duct by the closing device (71) is formed of an expansion nozzle with a small diameter in the shape of a jet (32) to limit the fluid flow rate upstream of the nozzle, having a calibrated passageway hole (40), the jet being mounted in that duct portion of the said internal duct which is located at the inlet of the chamber (3) for taking samples, the volume of the said internal duct being negligible with respect to the volume of the chamber (3), so that owing to the limitation of the fluid flow rate by the jet and to this negligible volume, the expansion of the fluid occurs inside of the chamber (3) only after the opening of the internal duct by the closing device (71) in order that the stoechiometry of the sample be preserved.

2. Sampling device according to claim 1, characterized in that the operating means comprise a remote-controlled motor (62) with a rotary output shaft (68) which extends in parallel relation to the axis of the device and a system of conversion of the rotary motion of the drive shaft into an axial motion of a rod (69) displaceable in the direction of the axis of the sampling device and in that the closing valve member (71) of the valve (72) for taking samples is mounted endwise of the rod (69) and made fast to this rod for axial displacement.

3. Sampling device according to claim 2, characterized in that the rod (69) is connected to the rotary ouput shaft (68) of the electric motor (62) by means for making fast thereto for rotation but permetting a relative axial motion of the rod (69) with respect to the rotary shaft (68) and in that a stationary nut (74) is provided, through which axially extends the said rod while engaging it through an external threading.

4. Sampling device according to one of claims 1 to 3, characterized in that it comprises means for retaining the sample in the chamber (3) of the bottle, which are formed of a check valve (98) mounted in the aforesaid duct (95) downstream of the valve for taking samples (71, 72).

5. Sampling device according to one of claims 1 to 4, characterized in that a filter (82) is mounted in the duct (73) for the flow of the fluid in the probe, this filter being adapted to retain possible dusts contained in the said fluid.

6. Sampling device according to one of claims 1 to 5, characterized in that the probe (B) comprises a pressure sensor (65) disposed so as to be exposed to the fluid downstream of the check valve (98) with which is associated a device for transmitting to the surface data relating to the measured pressure.

7. Sampling device according to one of claims 1 to 6, characterized in that the bottle (A) comprises means (24) for isolating the chamber (3) which are mounted in the internal duct (4) of the latter and are advantageously formed of an isolation valve comprising a duct closing valve member.

8. Sampling device according to one of claims 1 to 7, characterized in that the bottle (A) comprises in its lower portion (2) opposite to the end connected to the probe (B), a recess (14) connected to the chamber (3) by an internatl duct (16) and in that an isolation member (24) such as a duct closing valve is associated with this duct.

9. Sampling device according to claim 8, characterized in that a check valve (44) is mounted in the duct (16) between the isolation member (24) and the aforesaid recess (14).

10. Sampling device according to one of claims 1 to 9, characterized in that a body forming a nose (C) of the sampler may be removably assembled in axial alignement onto the lower end (2) of the bottle (A), this nose comprising an internal duct (106, 107) which communicates with the lower internal duct (16) of the bottle and opens into the external face of the nose through a connecting hole for a transfer of the samples entrapped in the bottle and in that a taking valve (105) is disposed in the said internal duct (106).

11. Sampling device according to claim 9 or 10, characterized in that the lower end (2) of the bottle (A) may be removably assembled to the upper end (1) of another bottle (A), both chambers (3) of the two bottles (A) communicating through their internal lower and upper ducts (16) and (4), respectively.

12. Sampling device according to one of claims 1 to 11, characterized in that the actuating and control devices disposed in the probe, such as the motor (62) for the actuation of the valve for taking samples (71, 72) and the pressure sensor (65) are fed with electrical energy and electrically operated through the cable from which the sampler is suspended and in that the electrical mounting for the receiving and the emission of electrical signals is disposed in the said probe.

13. Sampling device according to claim 12, characterized in that each device such as the motor (62) and the pressure sensor (65) is selectively addressable by an encoded control signal advantageously formed by a direct current with a specific value, transmitted to the electrical mounting through the aforesaid suspension cable and in that the electrical mounting comprises decoders (115, 124) for its signals.

14. Sampling device according to claim 12 or 13, characterized in that the electrical mounting comprises an interface sensor comprising a voltage-frequency converter (122) and transmitting to the surface the pressure values sensed as signals with suitable different frequencies.
